# EUROPÄISCHE PATENTANMELDUNG

(11) **EP 0 878 382 A2**
(43) Veröffentlichungstag der Anmeldung: **18.11.1998**
(21) Anmeldenummer: 98108024.5
(22) Anmeldetag: 02.05.1998
(51) Int. Cl.: B62J 6/10

(54) **Stromerzeuger für Fahrräder**

(30) Priorität: 15.05.1997 DE 19720301
(71) Anmelder: SRAM Deutschland GmbH, 97424 Schweinfurt (DE)
(72) Erfinder: Butz, Hans, Dipl.-Ing. (FH), 97525 Schwebheim (DE)

(57) **Zusammenfassung**

Die Erfindung betrifft einen Stromerzeuger (1) für die Deckung des Strombedarfs an Fahrrädern zur Montage seitlich an einer Achshälfte neben einem der Laufräder (3) mit einem Getriebe (10) zur Übersetzung ins Schnelle und einem daran angeordneten Rotor (6), der im Falle des Antriebs durch das Laufrad (3) ins Schnelle übersetzt umläuft. Der Stromerzeuger (1) wird mittels eines Auslegers (8) am Rotorgehäuse (7) durch Einklemmen zwischen die Ausfallenden an der Nabenachse (2) befestigt und weist ein schwenkbares Getriebegehäuse (14) auf, an dessen Ende ein Eingangszahnrad (11) angeordnet ist, welches mit einem Zahnrad, welches am Laufrad (3) befestigt ist, in Kämmeingriff gebracht werden kann. Der Vorteil dieser Anordnung ist die einfache Montage sowie die Möglichkeit, den Stromerzeuger (1) über eine Fernbedienung ein- und auszuschalten.

## Beschreibung

Die Erfindung bezieht sich auf einen Stromerzeuger für die Deckung des Strombedarfs an Fahrrädern gemäß dem Oberbegriff des Anspruches 1.

Mit der DE 90 02 898 U1 ist ein Nabendynamo für Fahrräder bekannt geworden, der einen Stator und einen Anker aufweist, die als Hauptkomponenten relativ zueinander verdrehbar in einer sich um eine feststehende Achse drehbaren Nabe angeordnet sind, wobei zwischen dem Anker und dem Stator ein Getriebe geschaltet ist, welches als Planetengetriebe ausgebildet ist und den Anker zu einer im Vergleich zum Stator höheren Drehzahl entgegen der Drehrichtung des Stators veranlaßt, wobei schließlich das Getriebe ein- und ausschaltbar ist.

Ebenso weist die DE 93 00 311 U1 einen Nabendynamo als integralen Bestandteil einer Nabe auf, der über ein Mehrfachplanetengetriebe angetrieben wird, wobei das Getriebe von außen über eine innenliegende Kupplung ein- oder ausschaltbar ist.

Nabendynamos werden in erster Linie im Vorderrad eines Fahrrades eingebaut, wobei es das Ziel dieser Konstruktion ist, den Wirkungsgrad für die Beleuchtung gegenüber dem Reifendynamo zu verbessern. Von Nachteil jedoch ist eine solche Konstruktion in sofern, als sie nicht an ein bereits vorhandenes Fahrrad ohne dessen Änderung angebaut werden kann, da der Nabendynamo Bestandteil des Komplettzusammenbaus eines Laufrades ist. Die Beleuchtung von Neufahrrädern wird Vorzugsweise mit billigen Reifendynamos angeboten, um den Neupreis eines Fahrrades konkurrenzfähig niedrig zu halten. Nachrüstungen von Nabendynamos bei solchen Fahrrädern ist mit Schwierigkeiten verbunden, da diese erst in ein Laufrad eingespeicht werden müssen, wodurch zu den hohen Herstellungskosten eines solchen Nabendynamos auch die Montagekosten in das Laufrad kommen.

Der mit dieser Erfindung vorgeschlagene Stromerzeuger für Fahrräder weist ebenso wie ein Nabendynamo ein ins Schnelle wirkendes Getriebe auf, das mit einem Zahnrad, welches mit dem Laufrad fest verbindbar ist, direkt gekoppelt werden kann. Aus diesem Grunde kann man sich ähnlich gute Wirkungsgrade wie bei Nabendynamos zunutze machen, wobei dieser Vorteil mit der Möglichkeit gekoppelt wird, diesem Stromerzeuger an beliebig ausgerüsteten Fahrrädern an einem der Laufräder nachzurüsten. Der Stromerzeuger weist einen Ausleger auf, mit Hilfe dessen dieser bei der Montage des betreffenden Laufrades innerhalb der Ausfallenden mit Hilfe der Radmuttern eingeklemmt wird. Am Ende des Auslegers ist ein Rotor in einem Rotorgehäuse angeordnet, an welches das Getriebe schwenkbar angeordnet ist, wobei am Ende des Getriebegehäuses ein Eingangszahnrad angeordnet ist, welches mit einem Zahnrad am Laufrad in Kämmeingriff gebracht werden kann. Der Stromerzeuger kann somit durch Ein- und Ausschwenken in und außer Kämmeingriff gebracht werden, wodurch der Rotor über das Getriebe direkt vom Laufrad angetrieben wird und schlupffrei mit dem vorgegebenen Übersetzungsverhältnis ins Schnelle arbeiten kann. Da die Verschwenkung des Getriebegehäuses gegenüber dem Ausleger nur wenige Winkelgrade entsprechend der Zahnhöhe der am Einschalten beteiligten Zahnräder ausmacht, kann sie durch die einfache Verdrehung eines Betätigungsnockens gegen eine Rückstellfeder bewerkstelligt werden. Von Vorteil ist die Möglichkeit der Anbringung einer Fernbedienung, wenn der Benutzer zum Einschalten des Stromerzeugers sich nicht bis zu der Montagestelle des Stromerzeugers seitlich am Laufrad in Achsnähe beugen will.

Es ist somit die Aufgabe der Erfindung, einen an beliebig ausgestatteten Fahrrädern nachrüstbaren Stromerzeuger zu schaffen, der vom Laufrad über ein Getriebe direkt antreibbar ist und im Falle von Strombedarf einschaltbar ist, wohingegen der Stromerzeuger und sein Getriebe ausgeschaltet bleiben, sofern kein Strombedarf am Fahrrad besteht.

Die Lösung ist im kennzeichnenden Teil des Anspruchs 1 enthalten; Details zur Ausführung sind den Unteransprüchen zu entnehmen.

Anhand von Zeichnungen und Skizzen wird ein Ausführungsbeispiel eines Stromerzeugers für die Deckung des Strombedarfs an Fahrrädern erläutert. Es zeigen:
- Fig. 1: eine Systemskizze eines Stromerzeugers an der Nabenachse eines Laufrades mit einem Rotor in einem Rotorgehäuse und einem Getriebe in einem Getriebegehäuse;
- Fig. 2: den Stromerzeuger mit der systematischen Darstellung des verschwenkbaren Getriebegehäuses zum Ausleger des Rotorgehäuses mit einem Eingangszahnrad am Getriebe und einem Zahnrad am Laufrad;
- Fig. 3: den Stromerzeuger mit dem Rotorgehäuse, dem Getriebegehäuse und einer Handbetätigung zur Befestigung an der Nabenachse über eine Befestigungslasche in perspektivischer Darstellung;
- Fig. 4: den Stromerzeuger gemäß Fig. 3 in perspektivischer Darstellung vom Gebriebegehäuse aus gesehen mit dem Eingangszahnrad;
- Fig. 5: das Rotorgehäuse mit dem Rotor und einem Rotorzahnrad in Explosivdarstellung;
- Fig. 6: die Befestigungslasche als Einzelteil;
- Fig. 7: einen Nocken zur Verschwenkung des Getriebegehäuses gegenüber dem Rotorgehäuse an der Handbetätigung.

Wird mit 1 ein Stromerzeuger für die Deckung des Strombedarfs an Fahrrädern bezeichnet, so weist dieser einen Rotor 6 in einem Rotorgehäuse 7 auf, welches über einen Ausleger 8 mit einer Nabenachse 2 eines Laufrades 3 verbunden ist. Der Rotor 6 wird über ein Getriebe 10 vom Laufrad 3 angetrieben, wobei der Drehimpuls vom Laufrad 3 über ein an diesem starr befestigten Zahnrad 4 auf ein Eingangszahnrad 11 übertragen wird, welches die Drehbewegung über einen Rädersatz im Getriebe 10 an ein Rotorzahnrad 12 weitergibt, welches direkt mit dem Rotor 6 verbunden ist. Das Getriebe 10 weist ein Getriebegehäuse 14 auf, welches schwenkbar über ein Schwenklager 13 am Rotorgehäuse 7 gelagert ist.

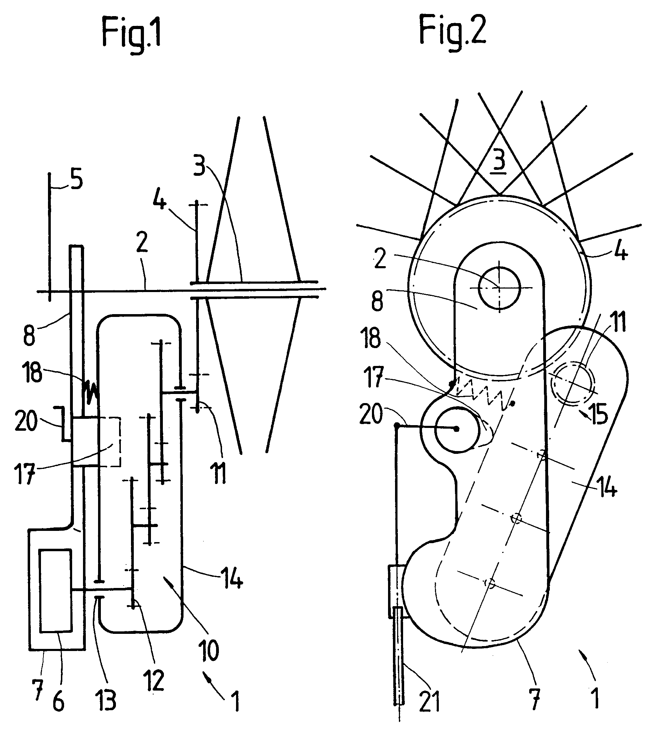

Gemäß Fig. 2 wird ersichtlich, wie das Getriebegehäuse 14 gegenüber dem Ausleger 8 des Rotorgehäuses 7 verschwenkbar ist, wobei das Getriebegehäuse 14 von einer Rückholfeder 18 gegen einen Nocken 17 angepreßt wird. Es ist ferner ersichtlich, daß der Rotor nur dann in Bewegung gesetzt werden kann, wenn das Eingangszahnrad 11 mit dem an dem Laufrad 3 befestigten Zahnkranz 4 in Kämmeingriff kommt. In der gezeichneten Stellung befinden sich die beiden Zahnräder 11 und 4 außer Eingriff, wodurch der Rotor 6 bei drehendem Laufrad 3 im Stillstand verharrt, da der Antrieb an der Stelle zwischen den Zahnrädern 11 und 4 unterbrochen ist. Wie aus den Fig. 2 und 7 ersichtlich, werden die Verzahnungen der Zahnräder 11 und 4 durch die Spitze des Nockens 17 auf Distanz gehalten. Wird der Nocken 17 an einer Handbetätigung 20 um etwa 90° verdreht, so zieht die Rückholfeder 18 das Getriebegehäuse 14 und das Eingangszahnrad 11 in Richtung Kämmeingriff mit dem Zahnkranz 4 auf Anschlag an. Der Zahnkranz 4 wird mit dem Laufrad 3 in der Weise verbunden, daß der Zahnkranz 4 auf seitlich herausstehenden Zentrierungsoberflächen zentriert und befestigt wird; im Falle einer nicht vorhandenen Zentrierung kann der Zahnkranz 4 Befestigungsösen an seinem Umfang aufweisen, die mit den Speichen verbunden werden können, nachdem der Zahnkranz 4 in eine zentrale Lage zur Nabenachse 2 gebracht worden ist.

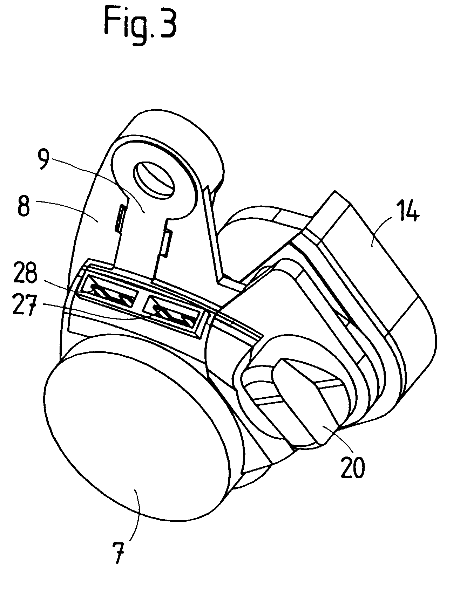

Die Fig. 3 zeigt in perspektivischer Ansicht ein konstruktives Ausführungsbeispiel eines Stromerzeugers 1, der seitlich am Fahrrad, vorzugsweise an der Nabenachse des Hinterrades befestigt ist. Der Ausleger 8 weist eine Befestigungslasche 9 aus elektrischem leitenden Metall auf, die mit dem aus Kunststoff bestehendem Rotorgehäuse verbunden ist und eine ringförmige Ausbildung mit Loch aufweist, die auf der Nabenachse 2 auffädelbar ist, wodurch die Möglichkeit besteht, den Stromerzeuger 1 innerhalb eines der beiden Ausfallenden des Fahrradrahmens mit den Achsmuttern gemeinsam mit der Nabenachse 2 des Laufrades 3 zu verklemmen. Die Befestigungslasche 9 wird vorzugsweise aus Stahlblech gefertigt und weist daher eine relativ geringe Stärke auf, wodurch sich das Maß zwischen den Ausfallenden durch die Montage des Stromerzeugers 1 nur geringfügig vergrößert.

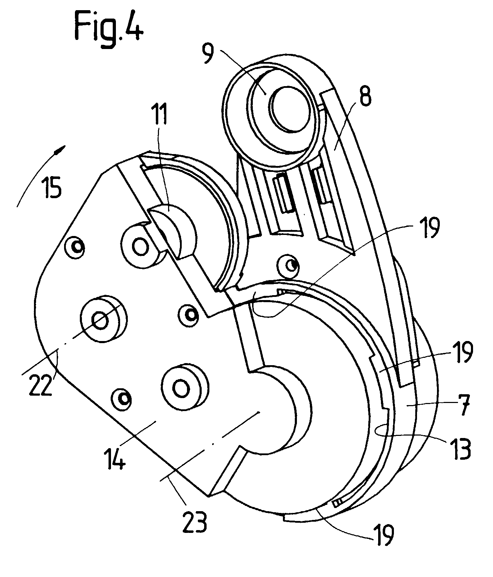

Gemäß Fig. 4 wird die Montage des Getriebegehäuses 14 ersichtlich, wobei das Schwenklager 13 aus mehreren Bajonettprofilen 19 gebildet ist. Da der Schwenkbereich des Getriebegehäuses 14 um eine Schwenkachse 23 nur wenige Winkelgrade beträgt, ist die Position der Bajonettprofile 19 derart ausgelegt, daß die Montage und Demontage des Getriebegehäuses 14 am Rotorgehäuse 17 nur dann vollzogen werden kann, wenn die beiden Gehäuseteile 14 und 7 deutlich aus dem Schwenkbereich zum Ein- und Auskuppeln der Zahnräder 4 und 11 herausgedreht sind. Ferner ist eine Nockenachse 22 zu erkennen, in welcher die Handbetätigung 20 im Getriebegehäuse 14 gelagert ist, um mit dem Nocken 17 die beiden Gehäuse 7 und 14 zu verschieben, wobei der Nocken 17 gegen eine Verstellfläche 24 gedreht wird.

Zur Erleichterung der Ein- und Ausschaltung des Stromerzeugers 1 ist gemäß Fig. 2 eine Fernbedienung 21 in der Weise angeordnet, daß die Handbetätigung 20 über einen Bowdenzug gesteuert wird, wodurch sich die Zahnräder 11 und 4 in oder außer Kämmeingriff bringen kann. Der Bowdenzug ist mit einem hier nicht dargestellten Steuerschalter verbunden, wodurch der Fahrradfahrer auch während der Fahrt den Stromerzeuger 1 zuschalten oder abschalten kann.

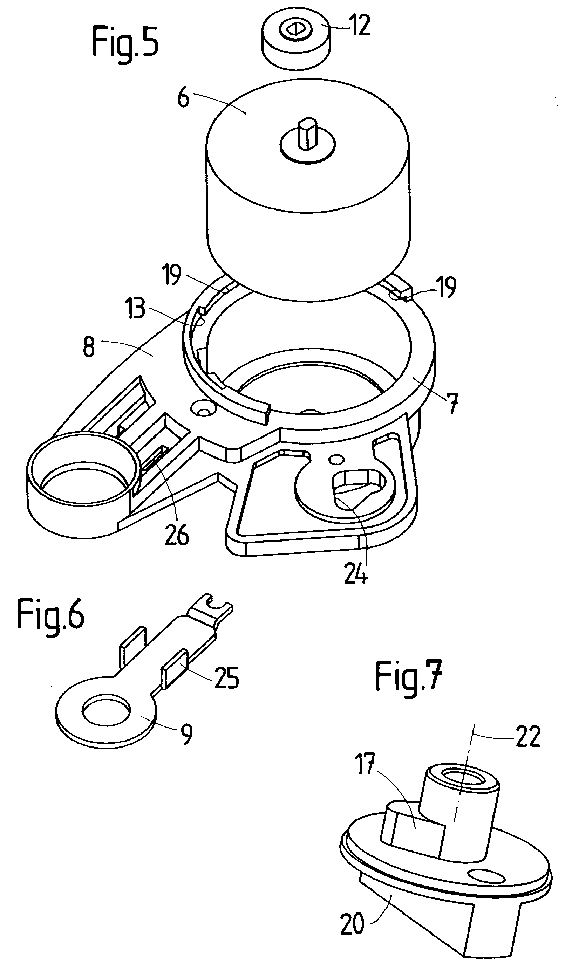

Gemäß Fig. 5 wird die Vebindungsmöglichkeit der Befestigungslasche 9 gemäß Fig. 6 mit dem Ausleger 8 dargestellt. Die Befestigungslasche 9 weist Verbindungswinkel 25 auf, die Durchbrüche 26 durchragen, so daß sie anschließend umgebogen bzw. verdreht werden können. Die derartig gesicherte Befestigungslasche 9 garantiert somit den einwandfreien Klemmsitz des Stromerzeugers 1 an der Nabenachse, nachdem die Befestigungslasche 9 zwischen den Ausfallenden des Rahmens 5 eingeklemmt worden ist. Durch die Herstellung der Befestigungslasche 9 aus stromführendem Metall wird gleichzeitig die Verbindung zu einem Massepol 27 hergestellt, der gemeinsam mit einem Pluspol 28 mindestens einen Anschluß zu den Stromverbrauchern am Fahrrad bildet. Der Pluspol 28 ist mit der Spule verbunden, in welcher durch den drehenden Rotor 6 der Strom erzeugt wird.

Ferner ist in einem Gehäusedurchbruch die Verstellfläche 24 dargestellt, die mit dem Nocken 17 der Handbetätigung 20 aus Fig. 7 zusammenwirkt.

## Patentansprüche

1. Stromerzeuger (1) für die Deckung des Strombedarfs an Fahrrädern zur Montage in der Nähe der Befestigungsstelle einer Nabenachse (2) eines Laufrades (3) am Ausfallende eines Rahmens (5) seitlich am Fahrrad mit einem Rotor (6), der über ein Getriebe (10) mit dem Laufrad kuppelbar ist,
dadurch gekennzeichnet,
daß das Getriebe (10) ein um ein Schwenklager (13) schwenkbares Getriebegehäuse (14) aufweist, wobei durch das Verschwenken des Getriebegehäuses (14) in einer Schwenkrichtung (15) ein Eingangszahnrad (11) des Getriebes (10) mit einem Zahnkranz (4) am Laufrad (3) im Kämmeingriff bringbar ist und wobei durch Verschwenken des Getriebegehäuses (14) entgegen der Schwenkrichtung (15) das Eingangsritzel (11) außer Eingriff mit dem Zahnkranz (4) gebracht werden, so daß der Rotor (6) einmal mit einem Übersetzungsverhältnis (16) gegenüber dem Laufrad (3) ins Schnelle angetrieben werden kann und ein anderes mal still steht.

2. Stromerzeuger nach Anspruch 1,
dadurch gekennzeichnet,
daß der Stromerzeuger (1) ein Rotorgehäuse (7) zur Aufnahme des Rotors (6) aufweist, das mit der Nabenachse (2) des Laufrades (3) fest verbindbar ist.

3. Stromerzeuger nach einem der Ansprüche 1 oder 2,
dadurch gekennzeichnet,
daß die Verschwenkung des Getriebegehäuses (14) durch die Verdrehung eines Nockens (17) veranlaßt wird, der in einem der beiden Gehäuse (7,14) gelagert ist und das jeweils andere Gehäuse (14,7) gegen die Kraft einer Rückstellfeder (18) verschwenkt.

4. Stromerzeuger nach Anspruch 3,
dadurch gekennzeichnet,
daß bei Freigabe der Verschwenkung durch Wegdrehen des Nockens (17) die Kraft der Rückstellfeder (18) das Getriebegehäuse (14) in der Schwenkrichtung (15) bis zu einer Ruheposition verstellt, in welcher sich das Eingangszahnrad (11) mit dem Zahnrad (4) im Eingriff befindet.

5. Stromerzeuger nach einem der Ansprüche 1 bis 4,
dadurch gekennzeichnet,
daß das Schwenklager (13) aus einem Bajonettverschluß mit einem Bajonettprofil (19) gebildet wird, wobei sich die Montageposition der Bajonettprofile (19) außerhalb des Schwenkbereiches der Gehäuse (7,14) befindet.

6. Stromerzeuger nach einem der Ansprüche 1 bis 5,
dadurch gekennzeichnet,
daß das Rotorgehäuse (7) einen Ausleger (8) aufweist, der mit der Nabenachse (2) befestigbar ist.

7. Stromerzeuger nach einem der Ansprüche 1 bis 6,
dadurch gekennzeichnet,
daß der Ausleger (8) zwischen das Ausfallende des Rahmens (5) und die feststehenden Nabenteile durch Anziehen von Achsmuttern verklemmbar ist.

8. Stromerzeuger nach einem der Ansprüche 6 bis 7,
dadurch gekennzeichnet,
daß die Gehäuse (7,14) aus Kunststoffmaterial bestehen.

9. Stromerzeuger nach einem der Ansprüche 1 bis 8,
dadurch gekennzeichnet,
daß der Ausleger an der Klemmstelle an der Nabenachse (2) eine Befestigungslasche (9) aus stromleitendem Material aufweist.

10. Stromerzeuger nach einem der Ansprüche 1 bis 9,
dadurch gekennzeichnet,
daß der Nocken über eine Handbetätigung (20) oder über eine Fernbedienung (21) betätigbar ist.
